(19) Europäisches Patentamt
European Patent Office
Office européen des brevets

(11) Veröffentlichungsnummer: **0 258 805 B1**

(12) **EUROPÄISCHE PATENTSCHRIFT**

(45) Veröffentlichungstag der Patentschrift: **18.09.91**

(51) Int. Cl.5: **C07F 9/42**

(21) Anmeldenummer: **87112380.8**

(22) Anmeldetag: **26.08.87**

# (54) Verfahren zur Herstellung von 2-Chlorethanphosphonsäuredichlorid.

(30) Priorität: **30.08.86 DE 3629579**

(43) Veröffentlichungstag der Anmeldung:
**09.03.88 Patentblatt 88/10**

(45) Bekanntmachung des Hinweises auf die Patenterteilung:
**18.09.91 Patentblatt 91/38**

(84) Benannte Vertragsstaaten:
**BE CH DE FR GB IT LI NL**

(56) Entgegenhaltungen:
**EP-A- 0 227 918**
**FR-A- 2 141 962**
**US-A- 4 213 922**

**CHEMICAL ABSTRACTS, Band 74, Nr. 3, 18. Januar 1971, Seite 319, Zusammenfassung Nr. 13218e, Columbus, Ohio, US; E.L. GEFTER et al.: "Vinylphosphonic acid dichloride", & METODY POLUCH. KHIM. REAKTIVOV PREP. 1969, Nr. 18, 98-9**

(73) Patentinhaber: **HOECHST AKTIENGESELLSCHAFT**
**Postfach 80 03 20**
**W-6230 Frankfurt am Main 80(DE)**

(72) Erfinder: **Siegel, Herbert, Dr.**
**Am alten Birnbaum 10a**
**W-6238 Hofheim am Taunus(DE)**
Erfinder: **Weiss, Erwin, Dr.**
**Vorderheide 1**
**W-6238 Hofheim am Taunus(DE)**
Erfinder: **Berger, Harald, Dr.**
**Johann-Strauss-Strasse 45**
**W-6233 Kelkheim Taunus(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung von 2-Chlorethanphosphonsäuredichlorid durch Umsetzung eines 2-Chlorethanphosphonsäureesters der Formel

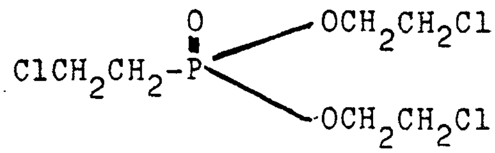

oder

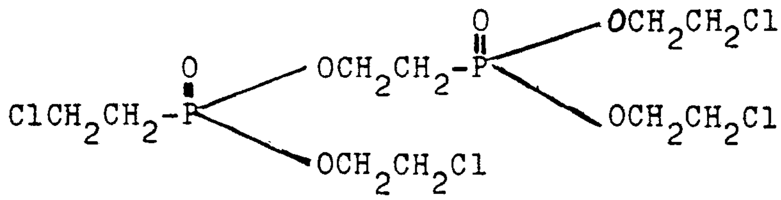

oder eines Gemisches der beiden Ester mit Thionylchlorid bei einer Temperatur von 60 bis 160 °C.

2-Chlorethanphosphonsäuredichlorid

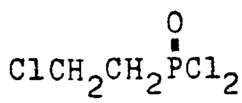

ist ein wertvolles Zwischenprodukt. Durch Hydrolyse erhält man 2-Chlorethanphosphonsäure, die als Pflanzenwachstumsbeschleuniger von Bedeutung ist. Durch Umsatz mit Hydroxyalkyl- oder Merkaptoalkylverbindungen erhält man Phosphonate oder Thiophosphonate. Derartige Verbindungen finden als Flammschutzmittel oder als Pflanzenschutzmittel Verwendung. Weiter kann aus 2-Chlorethanphosphonsäuredichlorid durch HCl-Abspaltung das Vinylphosphonsäuredichlorid hergestellt werden (CH-PS 391 699, DE-OS 1 568 945), welches seinerseits zu Vinylphosphonsäure hydrolysiert werden kann. Diese ist ein wichtiges Zwischenprodukt bei der Herstellung von Flammschutzmitteln. Außerdem ist sie ein wichtiges Monomeres bei der Herstellung von Homo- oder Mischpolymerisaten. Derartige Polymerisate sind in Lacken, Kunststoffen, Korrosionsinhibitoren und Beschichtungsmitteln von Bedeutung.

Es ist aus US-PS 4 213 922 bekannt, daß man 2-Chlorethanphosphonsäuredichlorid aus den oben genannten 2-Chlorethanphosphonsäure-bis-2-chlorethylester mit Hilfe von Thionylchlorid herstellen kann. Dabei werden als Katalysatoren tertiäre Amine, N,N-disubstituierte Formamide oder N,N-disubstituierte Phosphorsäuretriamide eingesetzt. Die Ausbeute ist jedoch trotz langer Reaktionszeiten recht niedrig, wie Beispiel 4 dieser Literaturstelle zeigt.

Aus DE-OS 2 132 962 ist dieselbe Umsetzung mit Hilfe von Phosgen statt Thionylchlorid bekannt. Als Katalysatoren werden dabei unter anderem tertiäre Phosphine und quaternäre Ammonium- oder Phosphoniumsalze eingesetzt. Diese Katalysatoren waren bereits Stand der Technik am Prioritätstag der US-PS 4 213 922; sie werden aber bei Verfahren gemäß der US-PS nicht benutzt. Offenbar wurde also bei Verwendung von Thionylchlorid die Gegenwart von tertiären Phosphinen oder quaternären Ammonium- oder Phosphoniumsalzen nicht für günstig gehalten. Es ist nämlich beispielsweise bekannt, daß tertiäre Phosphine mit Thionylchlorid und $SO_2$ eine Reihe von Reaktionen eingehen, die im vorliegenden Fall stören würden (Chemical Abstracts, Vol. 77, 1972, 48575 h und J. chem. Soc. 1965, 5516).

Überraschenderweise wurde nun gefunden, daß man 2-Chlorethanphosphonsäuredichlorid in kurzer Reaktionszeit mit hohen Ausbeuten aus den genannten 2-Chlorethanphosphonsäureestern mit Hilfe von Thionylchlorid in Gegenwart der genannten Katalysatoren oder auch von Alkali- oder Erdalkalihalogeniden herstellen kann.

In dem Dokument EP-A-0 227 918, welches unter Artikel 54(3) EPÜ fällt, wird in Beispiel 4 nur die Umsetzung von 2-Chlorethanphosphonsäure-bis(2-chlorethylester) mit Thionylchlorid in Gegenwart von Tetrabutylphosphoniumchlorid offenbart.

Gegenstand der Erfindung ist daher ein Verfahren zur Herstellung von 2-Chlorethanphosphonsäuredichlorid durch Umsetzung eines 2-Chlorethanphosphonsäureesters der Formel

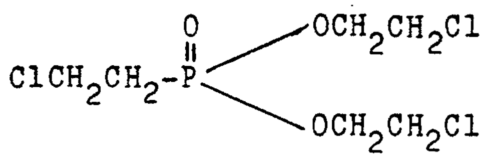

oder

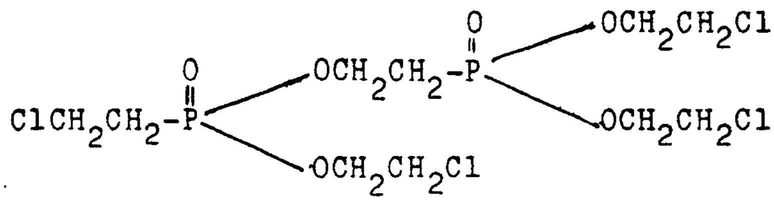

oder eines Gemisches der beiden Ester mit Thionylchlorid bei einer Temperatur von 60 bis 160 °C, dadurch gekennzeichnet, daß man die Umsetzung in Gegenwart eines Katalysators durchführt, der mindestens eine der folgenden Substanzen enthält

a) tertiäre Phosphine der allgemeinen Formel

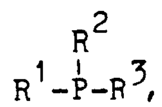

worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, oder Phenyl, ggf. mit Halogen-, $C_1$-$C_4$-Alkyl- oder $C_1$-$C_4$-Alkoxy-Resten substituiert, bedeuten

b) quaternäre Ammonium- oder Phosphoniumsalze der allgemeinen Formel

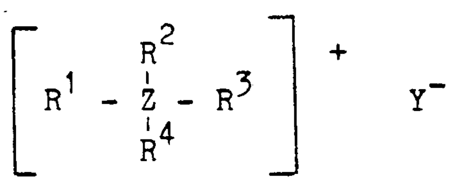

mit Z = N oder P, wobei $Y^-$ ein Anion einer starken Säure ist und worin $R^1$, $R^2$, $R^3$ die bei a) genannte Bedeutung haben und $R^4$ geradkettiges oder verzweigtes $C_1$-$C_{10}$-Alkyl oder mit Halogen-, $C_1$-$C_4$-Alkyl- oder $C_1$-$C_4$-Alkoxy-Resten substituiertes Benzyl bedeutet

c) Alkali- oder Erdalkalihalogenide,

wobei die Umsetzung von 2-Chlorethanphosphonsäure-bis(2-chlorethylester) mit Thionylchlorid in Gegenwart von Tetrabutylphosphoniumchlorid ausgeschlossen sein soll.

$R^1$, $R^2$, $R^3$ sind vorzugsweise $C_1$-$C_4$-Alkylreste (ggf. substituiert wie oben angegeben) oder Phenylreste (ggf. in der oben angegebenen Weise substituiert)

$R^4$ ist vorzugsweise ein $C_1$-$C_4$-Alkylrest oder ein mit Halogen-, $C_1$-$C_4$-Alkyl- oder $C_1$-$C_4$-Alkoxy-Resten substituiertes Benzyl.

Die Reaktionstemperatur beträgt 60-160 °C, vorzugsweise 60-140 °C, insbesondere 80-130 °C. Das Molverhältnis von Thionylchlorid zum eingesetzten Ester beträgt 2:1 bis 4:1, vorzugsweise 2,5:1 bis 3,5:1. Die Katalysatormenge beträgt 0,1 bis 10 Molprozent, vorzugsweise 0,5 bis 2 Molprozent, bezogen auf den eingesetzten Ester.

Vorzugsweise verwendet man einen Katalysator, der mindestens eines der unter a) genannten tertiären Phosphine oder der unter c) genannten Metallhalogenide enthält. Folgende tertiäre Phosphine sind besonders geeignet: Triphenylphosphin, Tris(4-Fluorphenyl)phosphin, Tris(4-Tolyl)phosphin, Tris(4-Methoxyphenyl)phosphin, (N,N-Diethyl)aminomethyldiphenylphosphin, Tri-n-butylphosphin, Bis(4-Methoxyphenyl)-methylphosphin. Ganz besonders geeignet ist Triphenylphosphin.

Unter den Metallhalogeniden gemäß c) ist Lithiumbromid besonders geeignet.

Als Anionen $Y^-$ einer starken Säure in der Formel für die quaternären Ammonium- oder Phosphoniumsalze kommen z.B. $Cl^-$, $Br^-$, $I^-$, $NO_3^-$, $SO_4^=$, $HSO_4^-$, $PO_4^=$ in Frage, d.h. das Symbol $Y^-$ soll auch für mehrwertige Anionen stehen.

Falls man quaternäre Ammonium- und Phosphoniumsalze als Katalysatoren einsetzt, sind besonders solche geeignet, die bei der Phasentransferkatalyse verwendet werden, beispielsweise Tetrabutylammoniumbromid, Tetrabutylphosphoniumbromid, Tetrabutylammoniumhydrogensulfat, Methyltrioctylammoniumchlorid, Benzyltrimethylammoniumbromid, Benzyltriethylammoniumchlorid, vor allem aber Tetrabutylammoniumbromid und Tetrabutylphosphoniumbromid.

Das Thionylchlorid wird vorzugsweise in den vorgelegten Ester eingeleitet, um eine ausreichende Reaktionszeit für die relativ reaktionsträgen Phosphonsäureester zu gewährleisten. Besonders bevorzugt ist es, das Thionylchlorid am Boden des Reaktionsgefäßes in den vorgelegten Ester einzuleiten.

Das während der Reaktion abgespaltene Dichlorethan, das bei der eingestellten Reaktionstemperatur abdestilliert und mit zunehmendem Umsatz Thionylchlorid aus dem Reaktionsgefäß austrägt, wird vorzugsweise kondensiert und wieder zurückgeführt. Durch die so bewirkte Kreisführung des unumgesetzten Thionylchlorids wird dieses optimal ausgenützt.

Man kann die Reaktion auch in Gegenwart eines inerten Lösungsmittels durchführen. Als Beispiele seien genannt: Chlorbenzol, Dichlorbenzol oder Kohlenwasserstoffe. Vorzugsweise arbeitet man auch jetzt bei 80 bis 130 °C.

Das Ende der Reaktion erkennt man daran, daß die Entwicklung von $SO_2$ und HCl aufhört.

Zur Aufarbeitung des Reaktionsgemischs destilliert man das entstandene Dichlorethan und ggf. das unumgesetzte Thionylchlorid ab. Das gebildete 2-Chlorethanphosphonsäuredichlorid kann durch Destillation gereinigt werden.

Die folgenden Beispiele sollen die Erfindung erläutern. Als Ausgangsmaterial wurde roher 2-Chlorethanphosphonsäure-bis(2-chlorethylester) verwendet, wie er bei der Arbusow-Umlagerung von Tris-2-chlorethylphosphit $P(OCH_2CH_2Cl)_3$ (DE-OS 2 132 962; Houben-Weyl, Band XII/1 (1963), Seite 389) durch Erhitzen auf 140 °C erhalten wird. Der rohe Ester bestand zu etwa 55 % aus 2-Chlorethanphosphonsäure-bis(2-chlorethylester)

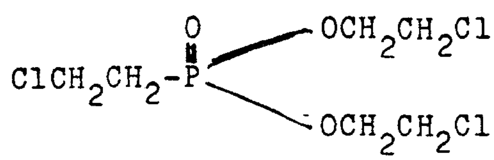

und etwa 38 % 2-Chlorethanphosphonsäuremono-2-chlorethylmono(2-chlorethanphosphonsäure-bis-2-chlorethylester)ester

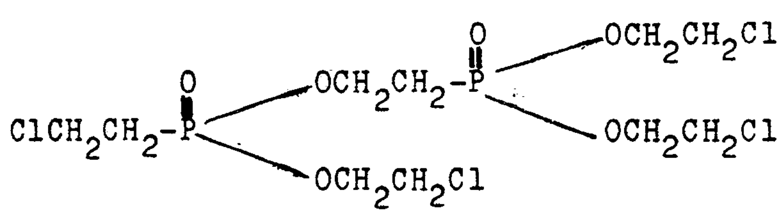

Alle Ansätze und Ausbeuten wurden auf den Reingehalt von 93 % bezogen.

Beispiel 1:

100 g roher 2-Chlorethanphosphonsäure-bis(2-chlorethylester) und 99,4 g (0.835 Mol) Thionylchlorid wurden innerhalb von 30 Minuten in Gegenwart von 1 g Tris-(4-Methoxyphenyl)-phosphin auf 125 °C erhitzt, wobei ab 90 °C eine starke Gasentwicklung einsetzte. Abgespaltenes Dichlorethan und unumgesetztes Thionylchlorid destillierten über eine Kolonne in eine Vorlage und wurden über ein Tauchrohr am Boden des Reaktionsgefäßes in die Reaktionsmischung zurückgeführt. Man erhitzte weitere 6 Stunden unter ständiger Rückführung von unumgesetztem Thionylchlorid auf 125 °C und destillierte dann zunächst bei Normaldruck und dann bei 150-250 mbar und 50-70 °C die leichtflüchtigen Bestandteile aus dem Reaktionsgemisch ab. Man erhielt 68.4 g Destillat, das noch 25 Gew.-% unumgesetztes Thionylchlorid enthielt. Anschließend wurden bei 4-5 mbar und 72-83 °C als Hauptlauf 52,3 g (79 % der Theorie) farblose Flüssigkeit erhalten, die zu 93 Gew.-% aus 2-Chlorethanphosphonsäuredichlorid und zu 7 Gew.-% aus Vinylphosphonsäuredichlorid bestand.

Beispiel 2:

Analog Beispiel 1 wurden 150 g roher 2-Chlorethanphosphonsäure-bis(2-chlorethylester) und 149.1 g (1.25 Mol) Thionylchlorid in Gegenwart von 2 g LiBr innerhalb von 20 Minuten auf 125 °C erhitzt und das Reaktionsgemisch 10 Stunden bei dieser Temperatur gehalten. Das abdestillierende Gemisch aus Thionylchlorid und Dichlorethan wurde während dieser Zeit kontinuierlich über ein Tauchrohr am Boden des Reaktionsgefäßes im Kreislauf zurückgeführt. Bei der destillativen Aufarbeitung, wie in Beispiel 1 beschrieben, erhielt man 109,8 g Vorfraktion, die aus 94,8 g Dichlorethan und 15,0 g Thionylchlorid bestand. Als Hauptfraktion gingen 86,6 g (86 % der Theorie) 2-Chlorethanphosphonsäuredichlorid und Vinylphosphonsäuredichlorid im Gewichtsverhältnis 95:5 über.

Vergleichsbeispiel (ohne Katalysator):

Analog Beispiel 1 wurden 100 g roher 2-Chlorethanphosphonsäure-bis(2-chlorethylester) und 99,4 g (0.835 Mol) Thionylchlorid innerhalb von 30 Minuten auf 125 °C erhitzt, jedoch jetzt in Abwesenheit eines Katalysators. Das Gemisch wurde 5 Stunden lang bei 125 °C gerührt, unter ständiger Rückführung des abdestillierenden Gemisches aus Thionylchlorid und Dichlorethan über ein Tauchrohr am Boden der Reaktionsgefäßes. Die anschließende Destillation ergab 83,6 g Vorlauf, der zu 92 Gew.-% aus unumgesetztem Thionylchlorid und nur zu 8 Gew.-% aus abgespaltenem Dichlorethan bestand. Auf eine weitere Destillation des ungenügend umgesetzten Reaktionsgemischs wurde verzichtet.

Beispiele 3-10:

Nach der Verfahrensweise von Beispiel 1 wurde roher 2-Chlorethanphosphonsäure-bis(2-chlorethylester) in Gegenwart verschiedener Katalysatoren (jeweils 1 Gew.-%) umgesetzt. Die folgende Tabelle zeigt die Katalysatoren, die Reaktionstemperatur, die Reaktionszeit, den Umsatz (bezogen auf Thionylchlorid), die Ausbeute und das Gewichtsverhältnis von 2-Chlorethanphosphonsäuredichlorid zu Vinylphosphonsäuredichlorid (CPC:VPC) im Reaktionsprodukt:

| Beispiel | Katalysator | Temperatur (°C) | Zeit (h) | Umsatz $SOCl_2$ (%) | Ausbeute (%) | CPC/VPC |
|---|---|---|---|---|---|---|
| 3 | Triphenylphosphin | 115 | 5 | 82 | 85 | 96:4 |
| 4 | Tris-(4-Fluorphenyl)phosphin | 115 | 5 | 77 | 53 | 98:2 |
| 5 | Tris-(p-Tolyl)phosphin | 125 | 6 | 86 | 79 | 89:11 |
| 6 | Bis-(4-Methoxyphenyl)methylphosphin | 125 | 6 | 55 | 30 | 96:5 |
| 7 | (N,N-Diethyl)aminomethyldiphenylphosphin | 125 | 7 | 63 | 33 | 95:5 |
| 8 | Tributylphosphin | 125 | 5 | 85 | 66 | 96:5 |
| 9 | Tetrabutylammoniumbromid | 125 | 6 | 87 | 80 | 93:7 |
| 10 | Tetrabutylphosphoniumbromid | 127 | 4 | 92 | 81 | 90:10 |

Beispiel 11:

Ein 1l-Kolben mit Fraktionieraufsatz, Tropftrichter und Innenthermometer wurde mit Stickstoff gespült. Es wurden 500 g roher 2-Chlorethanphosphonsäure-bis(2-chlorethylester) aus der Arbusow-Umlagerung von

Tris-(2-chlorethyl)-phosphit und 5 g Triphenylphosphin vorgelegt. Der Tropftrichter wurde mit 530 g (325 ml) Thionylchlorid beschickt. Man ließ nun 100 ml Thionylchlorid am Boden des Reaktionsgefäßes zulaufen und heizte zum Rückfluß. Nach 3 Stunden war die anfangs kräftige Gasentwicklung beendet; die Reaktionsmischung siedete konstant bei 115 °C Sumpftemperatur.

Man kühlte auf 50 °C ab und destillierte Dichlorethan bei 270 mbar bis zu einer Sumpftemperatur von 115 °C ab. Man erhielt 125,3 g Destillat.

Nach Belüften mit Stickstoff wurden weitere 125 ml Thionylchlorid zugegeben und die Mischung 4 h am Rückfluß gekocht. Dichlorethan wurde erneut bei 270 mbar bis zu einer Sumpftemperatur von 115 °C abdestilliert.

Dann wurden die restlichen 100 ml Thionylchlorid zugegeben und die Mischung 7 h am Rückfluß gekocht. Gegen Ende der Reaktion wurden insgesamt 30 ml Dichlorethan in Portionen zugegeben, damit die Sumpftemperatur 115 °C nicht überschritt.

Leichtsiedende Bestandteile wurden bei 270 mbar bis zu einer Sumpftemperatur von 115 °C abdestilliert. Der Rückstand wurde bei 20 mbar fraktioniert. Die bei 60-95 °C übergehende Fraktion wurde aufgefangen. Man erhielt 331,2 g Destillat folgender Zusammensetzung:

92,2 Gew.-% 2-Chlorethanphosphonsäuredichlorid
3,6 Gew.-% Vinylphosphonsäuredichlorid
1,3 Gew.-% Phosphoroxychlorid

Außerdem fielen 26,6 g Sumpf an.

Beispiel 12:

In einem 140l-Emailrührwerksbehälter mit solegekühltem Rückflußkühler (0 °C) wurden 120 kg roher 2-Chlorethanphosphonsäure-bis(2-chlorethylester) und 1,2 kg Triphenylphosphin vorgelegt. Dann wurden 39,1 kg Thionylchlorid am Boden des Behälters eindosiert und die Mischung zum Rückfluß erhitzt. Nach 4 h hatte sich eine Innentemperatur von 112 °C eingestellt; die Gasentwicklung war beendet. Dichlorethan wurde bei 270 mbar bis zu einer Sumpftemperatur von 113 °C abdestilliert; es fielen 32,5 kg Dichlorethan an.

Es wurden nun weitere 49,0 kg Thionylchlorid wie oben eindosiert und die Mischung 5 h am Rückfluß gekocht. Nach Abdestillieren des Dichlorethans (28,1 kg) bei 270 mbar bis zu einer Sumpftemperatur von 110 °C wurden abermals 39,1 kg Thionylchlorid wie oben eindosiert und die Mischung 8 h am Rückfluß gekocht. Dichlorethan wurde dann bis zu einer Sumpftemperatur von 118 °C abdestilliert. Als Rückstand verblieben 91 kg rohes 2-Chlorethanphosphonsäuredichlorid.

## Patentansprüche

**1.** Verfahren zur Herstellung von 2-Chlorethanphosphonsäuredichlorid durch Umsetzung eines 2-Chlorethanphosphonsäureesters der Formel

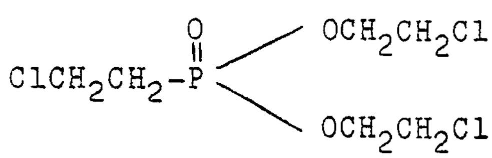

oder

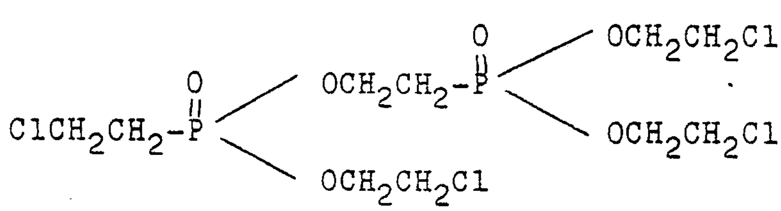

oder eines Gemisches der beiden Ester mit Thionylchlorid bei einer Temperatur von 60 bis 160 °C, dadurch gekennzeichnet, daß man die Umsetzung in Gegenwart eines Katalysators durchführt, der mindestens eine der folgenden Substanzen enthält:

a) tertiäre Phosphine der allgemeinen Formel

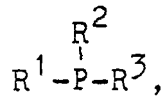

worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, oder Phenyl, ggf. mit Halogen-, $C_1$-$C_4$-Alkyl- oder $C_1$-$C_4$-Alkoxy-Resten substituiert, bedeuten

b) quaternäre Ammonium- oder Phosphoniumsalze der allgemeinen Formel

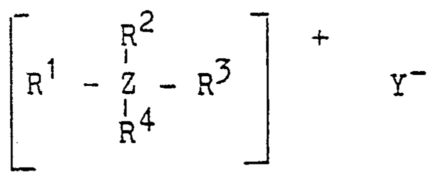

mit Z=N oder P, wobei $Y^-$ ein Anion einer starken Säure ist und worin $R^1$, $R^2$, $R^3$ die bei a) genannte Bedeutung haben und $R^4$ geradkettiges oder verzweigtes $C_1$-$C_{10}$-Alkyl oder mit Halogen-, $C_1$-$C_4$-Alkyl oder $C_1$-$C_4$-Alkoxy-Resten substituiertes Benzyl bedeutet

c) Alkali- oder Erdalkalihalogenide,

wobei die Umsetzung von 2-Chlorethanphosphonsäure-bis(2-chlorethylester) mit Thionylchlorid in Gegenwart von Tetrabutylphosphoniumchlorid ausgeschlossen sein soll.

**2.** Verfahren nach Anspruch 1, dadurch gekennzeichnet, daß man einen Katalysator einsetzt, der mindestens eine der unter a) oder c) genannten Substanzen enthält.

**3.** Verfahren nach Anspruch 1 oder 2, dadurch gekennzeichnet, daß man als Katalysator Triphenylphosphin oder Lithiumbromid einsetzt.

**4.** Verfahren nach einem der Ansprüche 1 bis 3, dadurch gekennzeichnet, daß man das während der Reaktion abgespaltene und zusammen mit un umgesetztem Thionylchlorid abdestillierende Dichlorethan kondensiert und zurückführt.

**5.** Verfahren nach einem der Ansprüche 1 bis 3, dadurch gekennzeichnet, daß man das Thionylchlorid in den vorgelegten Ester einleitet.

**6.** Verfahren nach einem der Ansprüche 1 bis 3, dadurch gekennzeichnet, daß man das Thionylchlorid am Boden des Reaktionsgefäßes in den vorgelegten Ester einleitet.

## Claims

**1.** A process for the preparation of 2-chloroethanephosphonic dichloride through reaction of a 2-chloroethanephosphonate of the formula

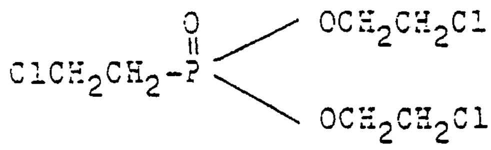

or

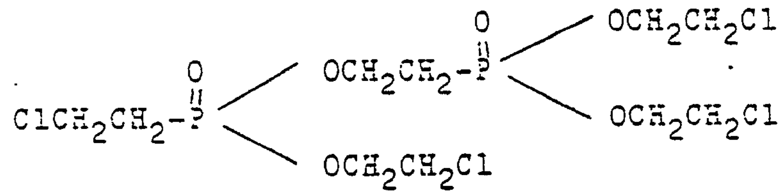

or a mixture of the two esters, with thionyl chloride at a temperature of 60 to 160 °C, which comprises carrying out the reaction in the presence of a catalyst which contains at least one of the following substances:

a) tertiary phosphines of the formula

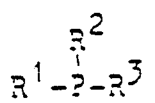 ,

in which the radicals $R^1$, $R^2$ and $R^3$ may be identical or different and denote straight-chain or branched $C_1$-$C_{10}$-alkyl, optionally substituted by $C_1$-$C_4$-alkoxy, $C_1$-$C_4$-alkylthio or $C_1$-$C_4$-dialkylamino radicals, or denote phenyl, optionally substituted by halogen, $C_1$-$C_4$-alkyl or $C_1$-$C_4$-alkoxy radicals,
b) quaternary ammonium or phosphonium salts of the formula

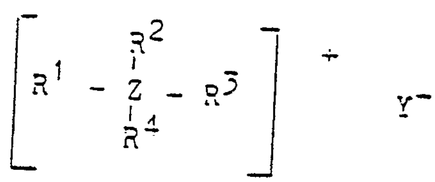

where Z = N or P, where $Y^-$ is an anion of a strong acid and in which $R^1$, $R^2$ and $R^3$ have the meaning mentioned in the case of a) and $R^4$ denotes straight-chain or branched $C_1$-$C_{10}$-alkyl or benzyl which is substituted by halogen, $C_1$-$C_4$-alkyl or $C_1$-$C_4$-alkoxy radicals,
c) alkali metal or alkaline-earth metal halides, with the exclusion of the reaction of bis(2-chloroethyl) 2-chloroethane phosphonate with thionyl chloride in the presence of tetrabutylphosphonium chloride.

2. The process as claimed in claim 1, wherein a catalyst is employed which contains at least one of the substances mentioned under a) or c).

3. The process as claimed in claim 1 or 2, wherein the catalyst employed is triphenyl phosphine or lithium bromide.

4. The process as claimed in any one of claims 1 to 3, wherein the dichloroethane eliminated and distilled off during the reaction together with unreacted thionyl chloride is condensed and recycled.

5. The process as claimed in any one of claims 1 to 3, wherein the thionyl chloride is introduced into the initially introduced ester.

6. The process as claimed in any one of claims 1 to 3, wherein the thionyl chloride is introduced into the initially introduced ester at the base of the reaction vessel.

## Revendications

1. Procédé pour préparer le dichlorure de l'acide chloro-2 éthane-phosphonique par réaction d'un ester de l'acide chloro-2 éthane-phosphonique répondant à l'une des formules :

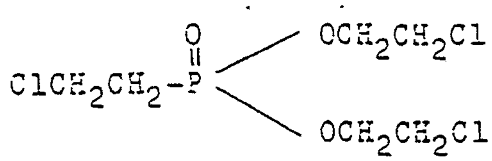

et

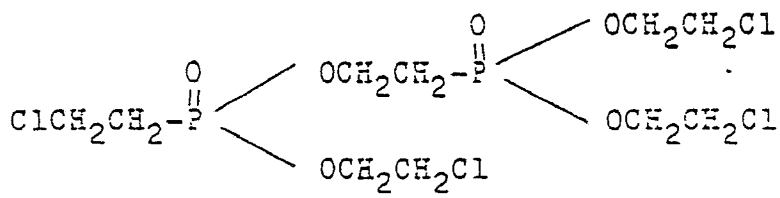

ou d'un mélange des deux esters, avec le chlorure de thionyle, à une température de 60 à 160 °C, procédé caractérisé en ce qu'on effectue la réaction en présence d'un catalyseur qui contient au moins une des substances suivantes :

a) phosphines tertiaires répondant à la formule générale :

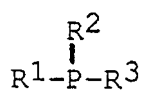

dans laquelle les radicaux $R^1$, $R^2$ et $R^3$ peuvent être identiques ou différents et représentent chacun un alkyle en $C_1$-$C_{10}$, linéaire ou ramifié, éventuellement porteur d'alcoxy en $C_1$-$C_4$, d'alkylthio en $C_1$-$C_4$ ou de di-($C_1$-$C_4$-alkyl)-amino, ou un phényle éventuellement porteur d'atomes d'halogènes, d'alkyles en $C_1$-$C_4$ ou d'alcoxy en $C_1$-$C_4$,

b) sels d'ammoniums ou de phosphoniums quaternaires répondant à la formule générale :

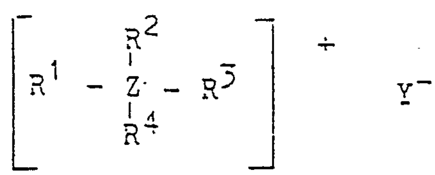

dans laquelle Z représente N ou P, le symbole $Y^-$ représente un anion d'un acide fort, $R^1$, $R^2$ et $R^3$ ont les significations qui leur ont été données sous a), et $R^4$ représente un alkyle en $C_1$-$C_{10}$, linéaire ou ramifié, ou un benzyle porteur d'atomes halogènes, d'alkyles en $C_1$-$C_4$ ou d'alcoxy en $C_1$-$C_4$, et

c) halogénures de métaux alcalins et halogénures de métaux alcalino-terreux,

à l'exclusion de la réaction du chloro-2 éthane-phosphonate du bis-(chloro-2 éthyle) avec le chlorure de thionyle en présence de chlorure de tétrabutyl-phosphonium.

2. Procédé selon la revendication 1 caractérisé en ce qu'on utilise un catalyseur qui contient au moins une des substances mentionnées sous a) ou c).

3. Procédé selon l'une des revendications 1 et 2, caractérisé en ce qu'on utilise, comme catalyseur, la triphénylphosphine ou le bromure de lithium.

4. Procédé selon l'une quelconque des revendications 1 à 3, caractérisé en ce qu'on condense et recycle le dichloréthane enlevé au cours de la réaction, qui s'échappe par distillation, en même temps que le chlorure de thionyle qui n'a pas réagi.

5. Procédé selon l'une quelconque des revendications 1 à 3, caractérisé en ce qu'on introduit le chlorure de thionyle dans l'ester préalablement mis en place.

6. Procédé selon l'une quelconque des revendications 1 à 3, caractérisé en ce qu'on introduit le chlorure de thionyle au fond du récipient réactionnel dans l'ester préalablement mis en place.